**Europäisches Patentamt**

**European Patent Office**

**Office européen des brevets**

(19)

(11) Veröffentlichungsnummer: **0 100 750**
**B1**

(12) **EUROPÄISCHE PATENTSCHRIFT**

(45) Veröffentlichungstag der Patentschrift:
21.09.88

(51) Int. Cl.⁴: **B 61 D 17/04,** B 62 D 33/02

(21) Anmeldenummer: **83810309.1**

(22) Anmeldetag: **07.07.83**

(54) **Anordnung von Versteifungselementen, insbesondere für Ladeguttransportfahrzeuge.**

(30) Priorität: 23.07.82 CH 4509/82

(43) Veröffentlichungstag der Anmeldung:
15.02.84 Patentblatt 84/7

(45) Bekanntmachung des Hinweises auf die Patenterteilung:
21.09.88 Patentblatt 88/38

(84) Benannte Vertragsstaaten:
AT BE CH DE FR GB IT LI LU SE

(56) Entgegenhaltungen:
DE-A-2 908 823
GB-A-460 881
US-A-2 801 597
US-A-3 240 168
US-A-4 062 045
US-A-4 331 083

(73) Patentinhaber: SCHWEIZERISCHE ALUMINIUM
AG, CH- 3965 Chippis (CH)

(72) Erfinder: Zehnder, Jürg, Husacherstrasse 2, CH-
8142 Uitikon (CH)

## Beschreibung

Die Erfindung betrifft eine Anordnung von Versteifungselementen, insbesondere für einen Eisenbahnwaggon zur Aufnahme von Ladegut, mit unter einer Bodenplatte beidseits einer Bodenwanne angeordneten Langstrager, wobei auf der Bodenplatte über einen Untergurt verbunden Seitenwände sowie Stirnwände eines Wagenkastens mit Obergurt sitzen und der Innenraum des Wagenkastens von Querstreben durchzogen ist und an einer Stirnfläche der Bodenwanne und mit der Bodenplatte verbunden ein Querträger festgelegt ist.

Bekannte Eisenbahnwaggons ohne Bodenwanne besitzen einen unter der Bodenplatte durchgehend angeordneten Längsträger, welcher der Aufnahme von Kupplungselementen dient. Dieser Längsträger fängt Insbesondere auf die Kupplung einwirkende Zug- bzw. Druckkräfte auf.

Bei Eisenbahnwaggons mit Bodenwanne, wie z. B. gemäss der US-A-3 240 168, ist der Längsträger durch die Bodenwanne unterbrochen und in zwei Teile aufgeteilt, wobei jedes Teil an der Bodenwanne endet. Die auf den Längsträger einwirkenden Kräfte werden in der Regel auf die Stirnwand der Bodenwanne übertragen und von dieser aufgefangen. Diese Anordnung hat sich als auf die Dauer nicht wirkungsvoll erwiesen. Beim Übergang von Längsträger zu Bodenwanne entstehen Ermüdungsrisse, welche eine häufige Reparatur der Waggons bedingen.

Aus der US-A-2 801 597 ist ein Unterbau eines Eisenbahnwagens bekannt, bei welchem der im Bereich der Bodenwanne unterbrochene Längsträger an Querträgern endet und so die Festigkeit des Wagens geringfügig erhöht.

Auch die Querstreben, welche insbesondere der Formstabilisierung des Waggons bei und nach der Beladung dienen, weisen den erheblichen Nachteil auf, dass sie bislang zum einen das Wageninnere kreuzen, wobei jeweils zwei sich kreuzende Querstreben miteinander verbunden sind und zum andern diese Querstreben meist am Ober- und Untergurt nicht lösbar festgelegt sind.

Der Erfinder hat sich zum Ziel gesetzt, die oben genannten Nachteile der bekannten Eisenbahnwaggonversteifungen zu beseitigen, sowie die Verteilung der auf den Waggon einwirkenden Kräfte zu verbessern.

Zur Lösung dieser Aufgabe führt, dass der Längsträger unter Bildung eines Auflagers auf den Querträger trifft und auf diesem Querträger zwei Hohlprofilabschnitte sitzen, welche in einer Länge in die Untergurte einragen.

Dadurch werden die auf den Längsträger einwirkenden Kräfte nicht mehr auf die Stirnwand der Bodenwanne abgeleitet, sondern von dem Querträger abgefangen, der wiederum im Untergurt festliegt. Auf diese Weise entsteht im Zusammenhang mit dem Untergurt eine orthotrophe Platte, was die Kräfteverteilung wesentlich verbessert.

Der in die Untergurte einragende Querträger ist endwärtig jeweils von mit der Bodenwanne verbundenen Abschlussblechen abgedeckt.

Zur weiteren Versteifung dient, dass der Wannenboden aus einer sandwichartigen Anordnung von Platten besteht. Über dem bekannten üblichen Boden ist ein Zwischenboden eingezogen, wobei der Zwischenboden und der Boden mit wellblechartig angeordneten Material streifen verbunden sind.

Eine zusätzliche Verbesserung der Kräfteverteilung bewirkt ein dem Längsträger etwa mittig aufgelegtes Profil, welches ebenfalls ähnlich wie der Querträger mit seinen Stirnkanten an den Untergurten festgelegt ist. Die Verbindungen zum Längsträger selbst bewirken abkragende Verstärkungsrippen.

Im Innern des Waggons sind erfindungsgemäss neue Anordnungen von Querstreben zum Versteifen der Waggonseitenwände entwickelt, sowie deren Festlegung an den Seitenwänden verbessert worden. Hierzu sind die Querstreben rohrförmig ausgebildet und weisen endwärtig einen Quetschbereich auf. Dieser Quetschbereich wird zwischen zwei im Wagenkasten angeordneten Laschen gesteckt und beispielsweise mittels eines Bolzens verbunden. Dadurch ist es möglich, je nach den Anforderungen Querstreben zu lösen und an anderer benötigter Stelle des Waggons einzusetzen. Damit entfällt auch die Notwendigkeit jeweils zwei sich kreuzende Querstreben zum Versteifen eines bestimmten Wagenbereichs zu benutzen. Es genügt hierfür eine Querstrebe, da ihre Verwendung wesentlich flexibler gestaltet werden kann.

Werden Eisenbahnwaggons ohne Bodenwanne benutzt, so genügt es durch waagrechte Querstreben die Obergurte der Wagenseitenwände sowie durch weitere abwechselnd rechts- und linksdiagonal in einem Abstand zueinander angeordnete Querstreben den Obergurt mit dem Untergurt zu verbinden. Bei Eisenbahnwaggons mit Bodenwanne wird zusätzlich im Bereich der Bodenwanne eine Querverstrebung der beiden Untergurte vorgesehen.

Weitere Vorteile Merkmale und Einzelheiten der Erfindung ergeben sich aus der nachfolgenden Beschreibung bevorzugter Ausführungsbeispiele sowie anhand der Zeichnung; diese zeigt in

Fig. 1 eine schematische Seitenansicht eines Eisenbahnwaggons;
Fig. 2 einen vergrösserten Ausschnitt eines Bodenteils aus Fig. 1;
Fig. 3 einen vergrösserten Querschnitt durch den Bodenteil nach Linie III - III in Fig. 2;
Fig. 4 eine Stirnansicht eines Eisenbahnwaggons;
Fig. 5 eine Draufsicht auf einen teilweisen dargestellten Eisenbahnwaggon.

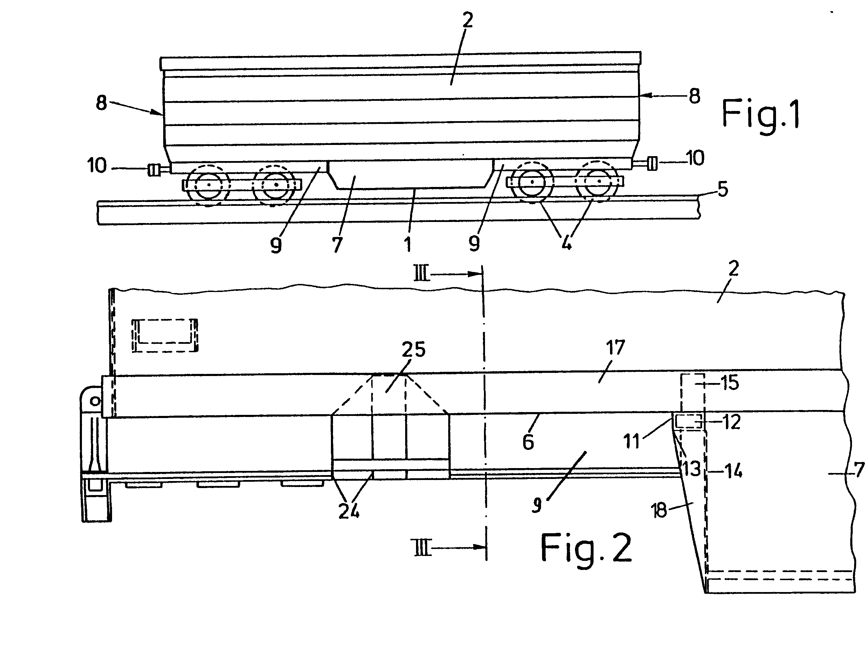

Ein Eisenbahnwaggon, insbesondere zum Transport von Gütern, weist nach Fig. 1 einen auf einem Bodenteil 1 aufgesetzten Wagenkasten 2 auf und bewegt sich mittels Räder 4 auf Schienen 5.

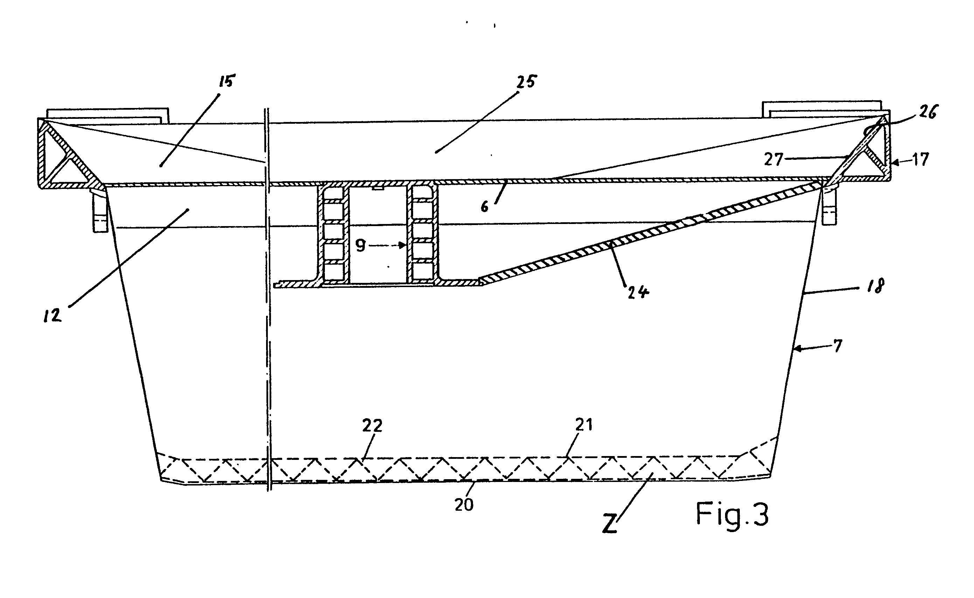

Das Bodenteil 1 besteht im wesentlichen aus einer Bodenplatte 6 (Fig. 3), welche etwa in der Mitte des Wagens von einer Bodenwanne 7 unterbrochen ist. Von der Bodenwanne 7 laufen jeweils zu den Stirnwänden 8 des Wagens Längsträger 9. Aus den Längsträgern 9 ragen stirnseitig Kupplungselemente 10 heraus.

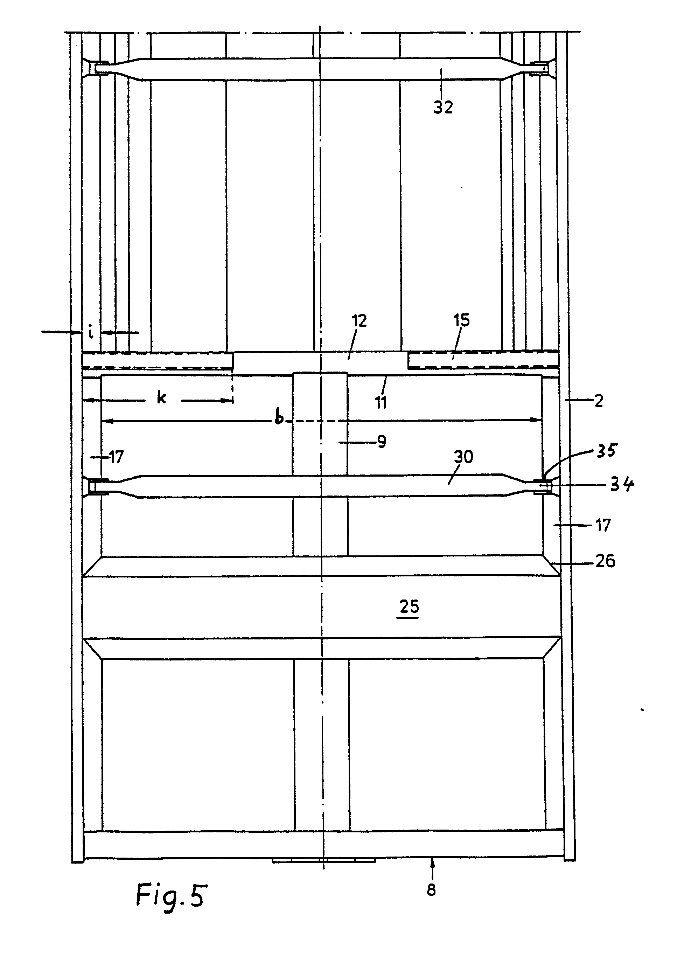

Nach Fig. 2 stösst ein Längsträger 9 mit einer Stirnkante 11 unter Bildung eines Auflagers 13 auf einen als Hohlprofil ausgebildeten Querträger 12 welcher an einer Stirnfläche 14 der Bodenwanne 7 unterhalb der Bodenplatte 6 über die gesamte Breite b (Fig. 5) angeordnet ist. Auf dem Querträger 12 sitzen wiederum zwei Hohlprofilabschnitte 15 der Länge k, welche in einer Länge i in einen Untergurt 17 des Wagenkastens 2 einragen. Der Querträger 12 ist beidseits von einem an der Bodenwanne 7 festgelegten 10 keilförmigen Abschlussblech 18 abgedeckt.

Nach Fig. 3 ist über einem Boden 20 innerhalb der Bodenwanne 7 ein Zwischenboden 21 eingezogen. Den Zwischenraum Z zwischen beiden Böden 20 und 21 durchsetzen wellblechartig Materialstreifen 22 und verstärken so die Bodenwanne 7 in erheblichem Masse.

Etwa in der Mitte des Längsträgers 9 kragen rechtwinklig Verstärkungsrippen 24 ab, welche mit einem walmdahförmigen Profil 25 in Verbindung stehen. Die Verstärkungsrippen 24 enden vor dem querschnittlich dreiecksförmigen Untergurt 17 (Fig. 3), während das Profil 25 sowohl dem Längsträger 9 aufsitzt, als auch mit seinen Stirnkanten 26 an der Hypothenuse 27 festgelegt ist.

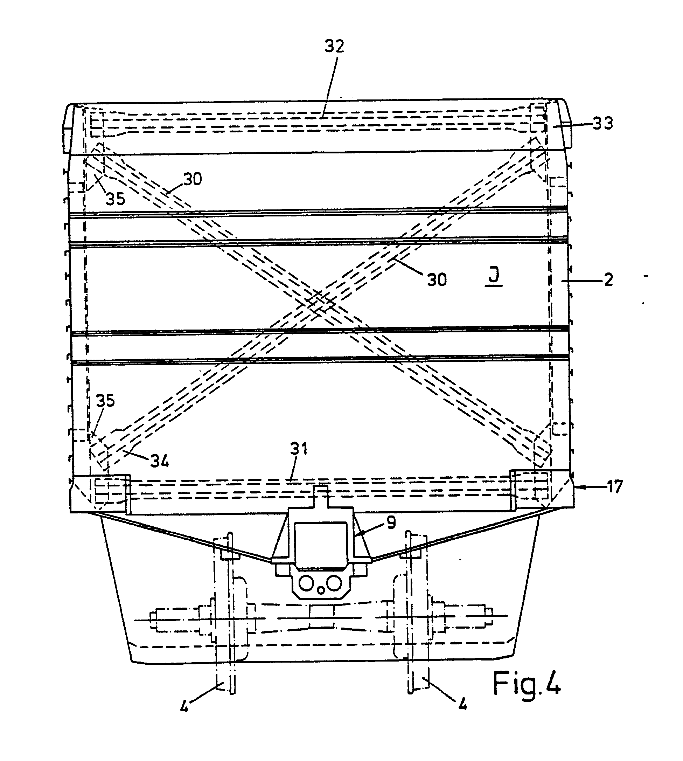

Nach Fig. 4 durchziehen den Wageninnenraum J mehrere Querstreben 30 in diagonaler Richtung vom Untergurt 17 des Wagenkastens 2 zu einem Obergurt 33 und zwar jeweils in einem Abstand wechselweise links- und rechtsdiagonal Weitere Querstreben 31 und 32 verbinden die sich gegenüberliegenden Untergurte 17 bzw. die Obergurte 33. Die Querstreben 30, 31 und 32 sind rohrförmig ausgebildet und weisen endwärtig einen Quetschberich 34 auf, mit welchem sie zwischen jeweils zwei Laschen 35 eingeführt und dort von beispielsweise - nicht dasgestellten - Bolzen gesichert werden.

der Innenraum (J) des Wagenkastens von Querstreben durchzogen ist und an einer Stirnfläche (14) der Bodenwanne und mit der Bodenplatte verbunden ein Querträger (12) festgelegt ist,
dadurch gekennzeichnet, dass
der Längsträger (9) unter Bildung eines Auflagers (13) auf den Querträger (12) trifft und auf diesem Querträger zwei Hohlprofilabschnitte (15) sitzen, welche in einer Länge (i) in die Untergurte (17) einragen.

2. Anordnung nach Anspruch 1, dadurch gekennzeichnet, dass der Querträger endwärtig von mit der Bodenwanne (7) verbundenen Abschlussblechen (18) abgedeckt ist.

3. Anordung nach Anspruch 1 oder 2, dadurch gekennzeichnet, dass die Bodenwanne (7) einen Boden (20) sowie einen Zwischenboden (21) aufweist, welche miteinander wellblechartig über Materialstreifen (22) verbunden sind.

4. Anordnung nach einem der Ansprüche 1 bis 3, dadurch gekennzeichnet, dass dem Längsträger (9) etwa mittig ein Profil (25) aufliegt, welches mit seinen Stirnkanten (26) an den Untergurten (17) festgelegt ist, sowie mit vom Längsträger (9) abkragenden Verstärkungsrippen (24) verbunden ist.

5. Anordnung nach einem der Ansprüche 1 bis 4, dadurch gekennzeichnet, dass die Querstreben (30, 31, 32) rohrförmig ausgebildet sind und endwärtig einen Quetschbereich (34) aufweisen, welchen jeweils zwei am Wagenkasten festgelegte Laschen (35) umfangen, und mit denen er durch eine lösbare Einrichtung verbunden ist.

6. Anordnung nach Anspruch 5, dadurch gekennzeichnet, dass die lösbare Einrichtung aus einem die beiden Laschen (35) und den Quetschbereich (34) durchsetzenden Bolzen besteht.

7. Anordnung nach Anspruch 5 oder 6, dadurch gekennzeichnet, dass waagrechte Querstreben (32) die Obergurte (33) der Wagenseitenwände (2) sowie weitere abwechselnd rechts- und linksdiagonal in einem Abstand zueinander angeordnete Querstreben (30) den Obergurt (33) mit dem Untergurt (17) verbinden.

8. Anordnung nach Anspruch 7, dadurch gekennzeichnet, dass im Bereich der Bodenwanne (7) zusätzlich zu den Querstreben (30, 32) weitere Querstreben (31) die beiden Untergurte (17) verbinden.

**Patentansprüche**

1. Anordnung von Versteifungselementen, insbesondere für einen Eisenbahnwaggon zur Aufnahme von Ladegut, mit einem unter einer Bodenplatte (6) beidseits einer Bodenwanne (7) angeordneten Längsträger (9), wobei auf der Bodenplatte über einen Untergurt (17) verbunden Seitenwände sowie Stirnwände eines Wagenkastens (2) mit Obergurt (33) sitzen und

**Claims**

1. Arrangement of stiffening elements, especially for a railway waggon for receiving load goods, with a longitudinal member (9) arranged underneath a floor plate (6) on either side of a floor pan (7), there being seated on the floor plate, connected via a bottom flange (17), side walls and end walls of a carriage body (2) with top flange (33) and the interior (J) of the carriage body having transverse struts passing through it and a transverse member (12) being fixed at one end face (14) of the floor pan and connected to the floor plate, characterized in that the longitudinal member (9) meets the transverse member (12), thus forming a support (13), and two hollow profile sections (15), which protrude over a length (i) into the bottom flanges (17), are seated on this transverse member.

2. Arrangement according to claim 1, characterized in that the transverse member is covered at the ends by terminal plates (18) connected to the floor pan (7).

3. Arrangement according to claim 1 or 2, characterized in that the floor pan (7) has a floor (20) and an intermediate floor (21), which are connected to each other via material strips (22) like corrugated sheeting.

4. Arrangement according to one of claims 1 to 3, characterized in that a profile (25) lies approximately centrally on the longitudinal member (9), which profile is fixed by its end edges (26) at the bottom flanges (17), and is connected to reinforcing ribs (24) angled off from the longitudinal member (9).

5. Arrangement according to one of claims 1 to 4, characterized in that the transverse struts (30, 31, 32) are of tubular design and have at the ends a crimping region (34), which in each case is clasped by two shackles (35) fixed at the carriage body and to which it is connected by a releasable mechanism.

6. Arrangement according to claim 5, characterized in that the releasable mechanism consists of a bolt passing through the two shackles (35) and the crimping region (34).

7. Arrangement according to claim 5 or 6, characterized in that horizontal transverse struts (32) connect the top flanges (33) of the carriage side walls (2) and further transverse struts (30), arranged spaced apart alternately diagonally right and diagonally left, connect the top flange (33) to the bottom flange (17).

8. Arrangement according to claim 7, characterized in that, in the region of the floor pan (7), in addition to the transverse struts (30, 32), further transverse struts (31) connect the two bottom flanges (17).

## Revendications

1. Agencement d'éléments de raidissement, notamment pour un wagon de chemin de fer destiné à recevoir des marchandises pondéreuses, comportant un longeron (9) disposé sous un panneau de plancher (6), des deux côtés d'une cuve de plancher (7), étant précisé que sur le panneau de plancher reposent des parois latérales ainsi que de parois frontales, reliées par l'intermédiaire d'une membrure inférieure (17), d'une caisse de wagon (2) à membrure supérieure (33) et étant précisé que l'espace intérieur (J) de la caisse du wagon est traverse par des contrefiches transversales et qu'à une surface frontale (14) de la cuve de plancher est fixée une poutre transversale (12) reliée au panneau de plancher,

caractérisé

en ce que le longeron (9) rencontre la poutre transversale (12) en formant un appui (13) ; et en ce que sur cette poutre transversale reposent deux tronçons (15) de profile creux qui pénètrent, d'une longueur (i) , dans les membrures inférieures (17).

2. Agencement selon la revendication 1, caractérisé en ce que, côté extrémité, la poutre transversale est recouverte par des tôles de recouvrement (18) reliées à la cuve de plancher (7).

3. Agencement selon la revendication 1 ou 2, caractérisé en ce que la cuve de plancher (7) présente un plancher (20) ainsi qu'un plancher intermédiaire (21) qui sont reliés l'un à l'autre, à la façon d'une tôle ondulée, par l'intermédiaire de bandes de matériau (22).

4. Agencement selon l'une des revendications 1 à 3, caractérisé en ce que sur le longeron (9), à peu près au centre, repose un profilé (25) qui est fixé, par ses arêtes frontales (26), aux membrures inférieures (17) et qui est relié avec des nervures de renfort (24) qui viennent en chanfrein depuis le longeron (9).

5. Agencement selon l'une des revendications 1 à 4, caractérisé en ce que les contrefiches transversales (30, 31, 32) sont de forme tubulaire et présentent, côté extrémité, une zone écrasée (34) qu'enserrent respectivemert deux attaches (35) qui sont fixées à la caisse du wagon et avec lesquelles cette zone est reliée par un dispositif à fixation amovible.

6. Agencement selon la revendication 5, caractérisé en ce que le dispositif à fixation amovible est constitué d'une broche qui traverse les deux attaches (35) et la zone écrasée (34).

7. Agencement selon la revendication 5 ou la revendication 6, caractérisé en ce que des contrefiches transversales horizontales (32) relient les membrures supérieures (33) des parois latérales (2) du wagon; et en ce que d'autres contrefiches (30), disposées alternativement en diagonal à droite et en diagonal à gauche, à une certaine distance l'une de l'autre, relient la membrure supérieure (33) à la membrure inférieure (17).

8. Agencement selon la revendication 7, caractérisé en ce que dans la zone de la cuve (7) de plancher, en plus des contrefiches transversales (30, 32), d'autres contrefiches transversales (31) relient les deux membrures inférieures (17).

Fig.1

Fig.2

Fig.3

Fig.4

Fig. 5